(19) Europäisches Patentamt / European Patent Office / Office européen des brevets

(11) **EP 4 722 698 A1**

(12) **EUROPÄISCHE PATENTANMELDUNG**

(43) Veröffentlichungstag:
**08.04.2026   Patentblatt 2026/15**

(51) Internationale Patentklassifikation (IPC):
**G01N 21/88** (2006.01)   **G01N 21/89** (2006.01)
**G01N 21/896** (2006.01)   **G01N 21/958** (2006.01)
**G02B 27/09** (2006.01)

(21) Anmeldenummer: 25201376.8

(22) Anmeldetag: **10.09.2025**

(52) Gemeinsame Patentklassifikation (CPC):
**G01N 21/8806; G01N 21/89; G01N 21/896;
G01N 21/958; G02B 27/09;** G01N 2021/8908

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **18.09.2024   DE 102024208944**

(71) Anmelder: **ISRA VISION GMBH
64293 Darmstadt (DE)**

(72) Erfinder:
• **Barnikol-Oettler, Julia
64665 Alsbach-Hähnlein (DE)**
• **Stolz, Oliver
64578 Gernsheim Rhein (DE)**

(74) Vertreter: **WSL Patentanwälte Partnerschaft mbB
Kaiser-Friedrich-Ring 98
65185 Wiesbaden (DE)**

(54) **BELEUCHTUNGSEINRICHTUNG ZUM ERZEUGEN EINER LINIENBELEUCHTUNG**

(57)     Die Erfindung betrifft eine Beleuchtungseinrichtung (10) zum Erzeugen einer Linienbeleuchtung entlang einer Längsrichtung mit einem Linsenelement (12), welches entlang der Längsrichtung eine optische Zentrumsebene (16) definiert und auf zumindest einem Abschnitt ein gleichbleibendes Querschnittsprofil aufweist, mit einer oder mehreren entlang der Längsrichtung auf einer Seite des Linsenelements angeordneten Lichtquellen (14, 14'), wobei das Linsenelement einen transparenten Linsenkörper mit einer oder mehreren der oder den Lichtquellen zugewandten Einkoppelflächen (60, 61, 62), durch die das von der oder den Lichtquellen emittierte Licht in den Linsenkörper eintritt, mit einer oder mehreren Reflexionsflächen (68, 69), an denen zumindest ein Teil des eingekoppelten Lichts innerhalb des Linsenkörpers totalreflektiert wird und mit einer oder mehrerer Auskoppelflächen (70, 71, 72), durch die das eingekoppelte Licht aus dem Linsenkörper austritt, aufweist und wobei das Linsenelement und die Lichtquelle oder die Lichtquellen so angeordnet sind, dass das durch die Auskoppelflächen aus dem Linsenkörper austretende Licht konvergiert.

Fig. 3

EP 4 722 698 A1

**Beschreibung**

Die Erfindung betrifft eine Beleuchtungseinrichtung zum Erzeugen einer Linienbeleuchtung entlang einer Längsrichtung mit einem Linsenelement, welches entlang der Längsrichtung eine optische Zentrumsebene definiert und welches entlang der Längsrichtung auf zumindest einem Abschnitt ein gleichbleibendes Querschnittsprofil aufweist, mit einer oder mehreren entlang der Längsrichtung auf einer Seite des Linsenelements angeordneten Lichtquellen. Die Erfindung betrifft ferner eine Einrichtung zur optischen Inspektion eines Gegenstands ("Inspektionseinrichtung") mit einer solchen Beleuchtungseinrichtung.

Die erfindungsgemäße Beleuchtungseinrichtung und Inspektionseinrichtung kann insbesondere zur Untersuchung transparenter Materialbahnen oder Gegenstände wie Glas oder Strukturglas, und auch nicht transparenter Materialbahnen oder Gegenstände mit beispielsweise lackierter Oberfläche aufweisen. Etwaige Fehler können insbesondere Beschädigungen auf der Oberfläche, und/oder bei transparentem Material Einschlüsse, wie Luftblasen oder Fremdkörper, oder Inhomogenitäten sein.

Beispielhaft wird auf die Druckschriften EP 1 742 041 A1 und EP 1 030 173 A1 verwiesen. Diese offenbaren Vorrichtungen zur Oberflächeninspektion bewegter Produkte. Hierbei wird die zu prüfende bewegte Oberfläche mit mindestens einer Kamera bildhaft erfasst. Ferner ist eine Beleuchtungskonfiguration vorgesehen, bei der selektiv einzeln oder mehrere Lichtquellen aus einer Anzahl von in Transportrichtung hintereinander angeordneten Lichtquellen aktiviert oder deaktiviert werden. Die hieraus resultierenden Einzelbilder werden zur Erkennung von Defekten auf der Oberfläche ausgewertet.

Die Druckschrift DE 198 13 073 A1 beschäftigt sich mit der Bestimmung der optischen Qualität von Flachglas. Hierfür ist eine Farb-Zeilenkamera vorgesehen, welche eine Beleuchtung durch das Glas oder in Reflexion betrachtet. Der Fokus der Kamera befindet sich dabei auf der Ebene des Glases. Die quer zur Transportrichtung angeordnete Beleuchtung beleuchtet die Oberfläche mit im Wechsel zwei unterschiedliche Farben.

Eine Beleuchtungseinrichtungen zum Erzeugen einer Linienbeleuchtung ist auch aus der Schrift EP 3 236 198 A1 bekannt. Als Lichtquellen sind hier LEDs in einer Reihe angeordnet, welche in mindestens zwei Gruppen voneinander unabhängig schaltbar sind. Den Lichtquellen ist ferner ein strahlenbündelndes optisches Element zugeordnet, welches beispielsweise aus einer Fresnel-Linse oder einer Zylinderlinse bestehen kann.

Zylinderlinsen haben sich zur Erzeugung einer Linienbeleuchtung als geeignet erwiesen. Sie lassen sich relativ preiswert und in nahezu beliebiger Länger als Stranggussprofil herstellen. Die Abbildungseigenschaften sind hinreichend gut, aus dem von den LEDs abgestrahlten Licht ein konvergentes Strahlenbündel mit einem Fokus in einem Arbeitsabstand ab ca. 50mm zu erzeugen.

Aufgabe der vorliegenden Erfindung ist es, die Effizienz der Beleuchtungseinrichtung zum Erzeugen einer Linienbeleuchtung bei vergleichbar geringen oder günstigeren Herstellungskosten zu steigern.

Die Aufgabe wird gelöst durch eine Beleuchtungseinrichtung gemäß Anspruch 1. Die Beleuchtungseinrichtung zum Erzeugen einer Linienbeleuchtung entlang einer Längsrichtung weist ein Linsenelement auf, welches entlang der Längsrichtung eine optische Zentrumsebene, auch optische Ebene genannt, definiert und welches entlang der Längsrichtung auf zumindest einem Abschnitt ein gleichbleibendes Querschnittsprofil aufweist. Die Beleuchtungseinrichtung umfasst ferner eine oder mehrere entlang der Längsrichtung auf einer Seite des Linsenelements angeordneten Lichtquellen. Das Linsenelement weist einen transparenten Linsenkörper mit einer oder mehreren der oder den Lichtquellen zugewandten Einkoppelflächen, durch die das von der oder den Lichtquellen emittierte Licht in den Linsenkörper eintritt, mit einer oder mehreren Reflexionsflächen, an denen zumindest ein Teil des eingekoppelten Lichts innerhalb des Linsenkörpers totalreflektiert wird und mit einer oder mehrerer Auskoppelflächen, durch die das eingekoppelte Licht aus dem Linsenkörper austritt, auf. Das Linsenelement und die Lichtquelle sind so angeordnet, dass das durch die Auskoppelflächen aus dem Linsenkörper austretende Licht konvergiert.

Die Einkoppelflächen, Reflexionsflächen und Auskoppelflächen werden unter dem Begriff "optische Flächen" zusammengefasst, durch welche die Lichtstrahlen in den Linsenkörper ein- oder austreten oder an welchen diese reflektiert werden. Diese Flächen sind optisch funktional, auch dann, wenn die Lichtstrahlen diese Flächen beispielsweise ohne Brechung passieren. Die Güte- und Toleranzanforderung an diese Flächen ist in der Regel höher als an Oberflächenabschnitte, welchen keine optische Funktion haben, weil sie beispielsweise parallel zum Strahlenverlauf ausgerichtet sind.

Im Unterschied zu einer Zylinderlinse findet im Inneren des erfindungsgemäßen Linsenelements an der Reflexionsfläche eine Totalreflexion statt. Diese ermöglicht eine insgesamt höhere Lichtausbeute, insbesondere, wenn als Lichtquellen LEDs eingesetzt werden, welche eine breite Abstrahlcharakteristik aufweisen. Das erfindungsgemäße Linsenelement erlaubt Linsengeometrien, die im Vergleich zu einer Zylinderlinse bei Verwendung ein und derselben LED eine erhöhte Lichtausbeute zur Folge haben, weil auch die Strahlen nutzbar gemacht werden, die unter großen Abstrahlwinkeln, z.B. Winkeln > 60° zur optischen Ebene verlaufen. Zudem erlaubt dies auch die Verwendung effizienterer LED mit breiterer Abstrahlcharakteristik. Solche LED in Verbindung mit der verbesserten Abbildungsleistung der erfindungsgemäßen Linse verbessert die Lichtausbeute um bis zu 220% im Vergleich zur Verwendung der bekannten LED-Zylinderlinsenkombination.

Gleichzeitig hat das erfindungsgemäße Linsenelement bei gleichen Einbaumaßen ein signifikant geringeres Volumen als eine Zylinderlinse, wodurch sich auch der Materialeinsatz und damit die Herstellungskosten reduzieren.

Das Prinzip der internen Totalreflexion ist im Zusammenhang mit LED-Lichtquellen in verschiedenen Anwendungen grundsätzlich bekannt. Beispielsweise kommen sogenannte TIR-Linsen bei Leuchtmittelspots oder im Automobilbereich für Schweinwerfer und Rücklichter zum Einsatz. Der Erfindung liegt die Erkenntnis zugrunde, dass sich eine entsprechende Geometrie auch auf ein Linsenelement übertragen lässt, welches entlang seiner Längsrichtung auf zumindest einem Abschnitt, bevorzugt über die gesamte optisch aktive Länge des Linsenelements und aus fertigungstechnischen Gründe besonders bevorzugt auf der gesamten Profillänge, ein gleichbleibendes Querschnittsprofil aufweist. Eine Herausforderung dabei liegt in der Einhaltung der erforderlichen Maß- und Oberflächentoleranz über die gesamte optisch aktive Länge des Linsenelements.

Zylinderlinsen haben einen kreisförmigen Querschnitt. Dies hat den Vorteil, dass sich beim Abkühlen nach der Formgebung gleichmäßige Spannungen in dem Material ausbilden, die eine Formstabilität und damit eine hinreichende optische Qualität sicherstellen. Generell lässt sich auch die Geometrie einer TIR-Linse in einem langgestreckten Profil zur Erzeugung einer Linienbeleuchtung im Strangpressverfahren herstellen. Die Geometrie von TIR-Linsen hat aber zwangsläufig eine wesentlich geringere Symmetrie als ein Zylinder. In der Regel ist die optische Zentrumsebene entlang der Längsrichtung die einzige Symmetrieebene des Profils. Ein entsprechendes Strangpressprofil neigt deshalb insbesondere bei der Herstellung sehr großer Längen zu einer produktionsbedingten Verformung.

Bevorzugt weist zumindest eine Auskoppelfläche daher wenigstens eine Stufe auf, wobei die Stufe durch einen Versatz der zumindest einen Auskoppelfläche im Wesentlichen in Richtung der optischen Zentrumsebene gebildet wird.

Durch diese Maßnahme lässt sich die Dicke des Profils bzw. die Profilquerschnittsfläche gezielt reduzieren, was sich im Hinblick auf eine gleichmäßigere Abkühlung des Profils nutzen lässt.

Zudem lässt sich auf diese Weise ein Profil realisieren, welches um bis zu 70 % leichter ist als eine Zylinderlinse mit vergleichbaren Abbildungseigenschaften.

Im Grunde hilft bereits eine einzige Stufe im Hinblick auf eine verbesserte Maß- und Formhaltigkeit des Profils. Mit zunehmender Anzahl von Stufen wird das Ergebnis in dieser Hinsicht besser. Einer größeren Anzahl an Stufen steht jedoch ein Anstieg der Fresnelverluste entgegen. Ein guter Kompromiss wurde bei einer Auskoppelfläche mit drei Stufen ermittelt.

Durch jede Stufe ist die Auskoppelfläche in zwei benachbarte, optisch funktionale Auskoppelteilflächen geteilt, welche durch eine Versatzfläche ohne optische Funktion miteinander verbunden sind. Ein "Versatz der zumindest einen Auskoppelfläche im Wesentlichen in Richtung der optischen Zentrumsebene" meint demnach, dass die Versatzfläche in einer Ebene liegt, welche parallel zur Zentrumsebene verläuft und jedenfalls um nicht mehr als 15°, bevorzugt nicht mehr als 12° und besonders bevorzugt nicht mehr als 10° gegenüber der Zentrumsebene geneigt ist.

Die wenigstens eine Stufe wird besonders bevorzugt durch einen Versatz der zumindest einen Auskoppelfläche parallel zur Strahlrichtung der entlang der Kante der Stufe austretenden Lichtstrahlen gebildet.

Die Kante der Stufe befindet sich dort, wo sich die Ebene der Auskoppelfläche und die Ebene der Versatzfläche schneiden. Selbstverständlich sind die Kanten praktisch nicht beliebig scharf ausgebildet, sondern typischerweise fertigungsbedingt verrundet. Ein typischer Verrundungsradius beträgt zwischen 0,1 und 0,5 mm. Geometrische Angaben sind daher generell so zu verstehen, dass Sie toleranzbedingte oder fertigungstechnisch notwendige Abweichungen von der beschriebenen idealen Geometrie einschließen.

Die wenigstens eine Stufe ist vorzugsweise so dimensioniert und angeordnet, dass für die maximale Strecke $S_{max}$, die ein reflektierter Lichtstrahl in dem Linsenkörper zwischen einer Reflexionsfläche und einer Auskoppelfläche zurücklegt, und für die minimale Strecke $S_{min}$, die ein reflektierter Lichtstrahl in dem Linsenkörper zwischen einer Reflexionsfläche und einer Auskoppelfläche zurücklegt oder die ein direkter Lichtstrahl in dem Linsenkörper zwischen einer Einkoppelfläche und einer Auskoppelfläche zurücklegt, gilt: $1 < S_{max} / S_{min} < 6$.

Durch diese Maßnahme ist sichergestellt, dass die Dicke des Profils in Richtung des Strahlenverlaufs innerhalb der Linse nicht mehr variiert, als es der optische Strahlengang innerhalb der Linsenelements erfordert, was eine ausreichend gleichmäßige Abkühlung des Profils nach der Formgebung sicherstellt und die Herstellung von langen Profilen unter Einhaltung der für die optischen Abbildungseigenschaften erforderlichen Toleranzen ermöglicht.

Zumindest eine Auskoppelfläche weist vorzugsweise eine konvex gekrümmte Oberfläche auf, durch die (überwiegend) innerhalb des Linsenkörpers nicht reflektierte Lichtstrahlen aus dem Linsenkörper austreten.

Beschrieben sind hier die direkten Lichtstrahlen, welche in der Regel nahe der Zentrumsebene durch eine Einkoppelfläche in den Linsenkörper eintreten und ohne Totalreflexion auf der gegenüberliegenden Seite wieder austreten und dabei an der konvexe Auskoppelfläche fokussiert werden. Dies beschreibt die (rechnerisch) ideale Geometrie der Beleuchtungseinrichtung. In der Realität wird aufgrund von Fertigungstoleranzen und einer flächigen Ausdehnung der Lichtquelle, auch ein geringer Anteil reflektierter Lichtstrahlen durch die konvexe Auskoppelfläche aus dem Linsenkörpern austreten, in welchem Sinne hier auch von "überwiegend" innerhalb des Linsenkörpers nicht reflektierten Lichtstrahlen die Rede ist.

Zumindest eine Auskoppelfläche ist zur Zentrumsebene hin geneigt, durch die (überwiegend) innerhalb des Linsenkörpers reflektierte Lichtstrahlen aus dem Linsenkörper austreten.

"Zur Zentrumsebene hin geneigt" beschreibt den Umstand, dass zwischen der Auskoppelfläche und der Zentrumsebene außerhalb der Linsenelements ein spitzer Winkel eingeschlossen ist. Bei einer zur Zentrumsebene spiegelsymmetrischen Anordnung zweier Auskoppelfläche kann daher auch von einer Neigung der Auskoppelfläche nach innen gesprochen werden. Durch die nach innen geneigten Auskoppelflächen weist das Linsenelement ein geringeres Volumen auf, was sich ähnlich wie die Stufen positiv auf die Fertigung und das Gewicht auswirkt. Jedoch kann die Neigung nicht beliebig groß gewählt werden, weil dies zu Lasten der Abbildungseigenschaften geht. Konkret bedingt eine zu große Neigung höhere Fresnelverluste.

Die Reflexionsflächen sind vorzugsweise so ausgebildet, dass die daran reflektierten Lichtstrahlen in erster Näherung bereits so fokussiert sind, dass eine Brechung beim Austritt durch die Auskoppelfläche nicht mehr benötigt wird bzw. erwünscht ist. Die Auskoppelfläche ist daher vorzugsweise so zur Zentrumsachse geneigt, dass die reflektierten Lichtstrahlen im Wesentlichen senkrecht zur Auskoppelfläche verlaufen. Wenn ein geringer Anteil direkter Lichtstrahlen durch die geneigte Auskoppelfläche aus dem Linsenkörpern austritt, ist dies tolerabel, in welchem Sinne hier auch von "überwiegend" innerhalb des Linsenkörpers reflektierten Lichtstrahlen die Rede ist. Auch ist es in der Praxis nicht möglich, dass die reflektierten Lichtstrahlen ideal senkrecht zur Auskoppelfläche verlaufen. Dies ist beispielsweise schon deshalb nicht erreichbar, weil die Lichtquelle flächig ausgedehnt ist. In diesem Sinne genügt es, wenn die reflektierten Lichtstrahlen im Rahmen einer Winkeltoleranz von +/- 3° senkrecht zur Auskoppelfläche verlaufen. Das ist hier mit im Wesentlichen senkrecht gemeint.

Die wenigstens eine Stufe ist bevorzugt in der zumindest einen zur Zentrumsebene hin geneigten Auskoppelfläche ausgebildet.

Die Kombination aus der Neigung der Auskoppelfläche nach innen mit den Stufen ermöglicht eine weitere Verbesserung des Profils im Hinblick auf eine gleichmäßige Abkühlung nach der Formgebung bei gleichzeitig geringer Baugröße ohne Verluste der Abbildungsgenauigkeit.

Das Linsenvolumen weist im Querschnitt vorzugsweise eine maximale Erstreckung $L_{max}$ und eine minimale Erstreckung $L_{min}$ aufweist, wobei die maximale Erstreckung $L_{max}$ den maximalen Kreisdurchmesser bezeichnet, der vollständig innerhalb des Querschnitts Platz findet, und wobei die minimale Erstreckung $L_{min}$ der geringste lineare Abstand zwischen einer Einkoppelfläche und einer Auskoppelfläche oder zwischen einer Reflexionsfläche und einer Auskoppelfläche ist, und wobei gilt: $1 < L_{max} / L_{min} < 5$.

Auch diese Ausgestaltung lässt sich durch die Dimensionierung und Anordnung der wenigstens eine Stufe erzielen und stellt sicher, dass die Dicke des Profils unter Beachtung der optischen Abbildungseigenschaften innerhalb der Linse nicht mehr als um einen Faktor 5 variiert, was die gleichmäßige Abkühlung des Profils nach der Formgebung sicherstellt und die Herstellung von bis zu 6 m langen Profilen unter Einhaltung der für die optischen Abbildungseigenschaften erforderlichen Toleranzen ermöglicht.

Das Querschnittsprofil weist eine Querschnittsfläche und eine Umfangslänge auf, wobei das Verhältnis aus Querschnittsfläche zu Umfangslänge weiter bevorzugt zwischen 2,0 mm und 4,5 mm, besonders bevorzugt zwischen 2,5 mm und 4,0 mm beträgt.

Auch bei dieser Ausgestaltung geht es um eine weitere Verbesserung der Abkühlung des Profils nach der Formgebung.

Das Linsenelement weist ein Aspektverhältnis zwischen Länge und maximaler Breite von mindestens 10:1, vorzugsweise 20:1, besonders bevorzugt von 50:1 auf.

Die Länge ist die maximale Erstreckung des Linsenelements in Längsrichtung. Die maximale Breite ist die maximale Erstreckung des Linsenelements senkrecht zur Mittelebene.

Das Linsenelement weist ein strangpressfähiges Profil auf.

Ein strangpressfähiges Profil ist ein Profil, dessen Querschnitt senkrecht zur Längsrichtung stets gleichbleibt. In der Kunststoffformgebung kommen hierfür Extrusionsverfahren zum Einsatz. Außerdem ist das Profil so konzipiert, dass es innerhalb der geforderten Toleranz herstellbar ist.

Das Linsenelement ist besonders bevorzugt aus PMMA gefertigt.

Die Lichtquelle ist vorzugsweise aus einer oder mehreren LEDs gebildet. So können beispielsweise mehrere Lichtquellen zur Erzeugung von Licht unterschiedlicher Wellenlänge durch jeweils mehrere baugleiche in Längsrichtung nebeneinander angeordnete LEDs gebildet sein.

Die Aufgabe wird ferner gelöst durch eine Einrichtung zur optischen Inspektion eines Gegenstands mit einer Beleuchtungseinrichtung wie vorstehend beschrieben, wobei der Gegenstand und die Beleuchtungseinrichtung in einer Bewegungsrichtung relativ zueinander bewegbar sind, wobei die Längsrichtung quer zur Bewegungsrichtung angeordnet ist und wobei die Beleuchtungseinrichtung so auf den Gegenstand ausrichtbar ist, dass das durch die Auskoppelflächen aus dem Linsenkörper austretende Licht auf eine Oberfläche des Gegenstands fällt. Die Einrichtung zur optischen Inspektion weist ferner eine Aufnahmeeinrichtung zur Aufnahme von Bildern von dem beleuchteten Gegenstand und eine Recheneinheit zur Auswertung der aufgenommenen Bilder auf.

Die Einrichtung zur optischen Inspektion ist eingerichtet zum Einbau beispielsweise in einer Transport- oder einer Produktionsanlage, mit der der Gegenstand entlang der Bewegungsrichtung transportiert wird. Die Einrichtung ist ortsfest an der Transport- oder einer Produktionsanlage so angeordnet, dass der Gegenstand in einem Abstand an dem Linsenelement vorbeigeführt wird, der vorzugsweise der Brennweite des Linsenelements entspricht. Dieser Abstand, auch als Arbeitsabstand bezeichnet, wird ausgehend von der auskoppelseitigen Endfläche des Linsenelements entlang der Zentrumsebene bis zur Oberfläche des Gegenstands gemessen.

In der Realität läuft das Strahlenbündel einer solchen TIR-Linse nicht auf einer eindimensionalen Brennlinie zusammen, sondern bildet eine Taille aus. Als Brennweite wird deshalb ein Brennweitenbereich verstanden, in dem die Beleuchtungsstärke auf der Oberfläche eines beleuchteten Gegenstand nicht mehr als 25% unter der maximalen Beleuchtungsstärke abweicht. In manchen Anwendungen kann die Einrichtung auch so betrieben werden, dass der Gegenstand in einem Arbeitsabstand an dem Linsenelement vorbeigeführt wird, der außerhalb des Brennweitenbereichs liegt, was eine geringere Strahlkonzentration auf der Oberfläche des Gegenstands zur Folge hat.

Weitere Merkmale und Vorteile der Erfindung werden nachfolgend anhand von Ausführungsbeispielen in den Figuren erläutert. Es zeigen:

Figur 1    den Querschnitt durch ein Linsenelement gemäß einer ersten Ausführungsform der Erfindung;

Figur 2    den Querschnitt durch ein Linsenelement gemäß einer zweiten Ausführungsform der Erfindung;

Figur 3    den Querschnitt durch ein Linsenelement gemäß einer dritten Ausführungsform der Erfindung;

Figur 4    das Linsenelement gemäß Figur 3 mit anderer Parametrisierung und

Figur 5    die Beleuchtungsstärke unter Verwendung einer erfindungsgemäßen Beleuchtungseinrichtung im Vergleich mit der Beleuchtungsstärke unter Verwendung einer Beleuchtungseinrichtung mit Zylinderlinse.

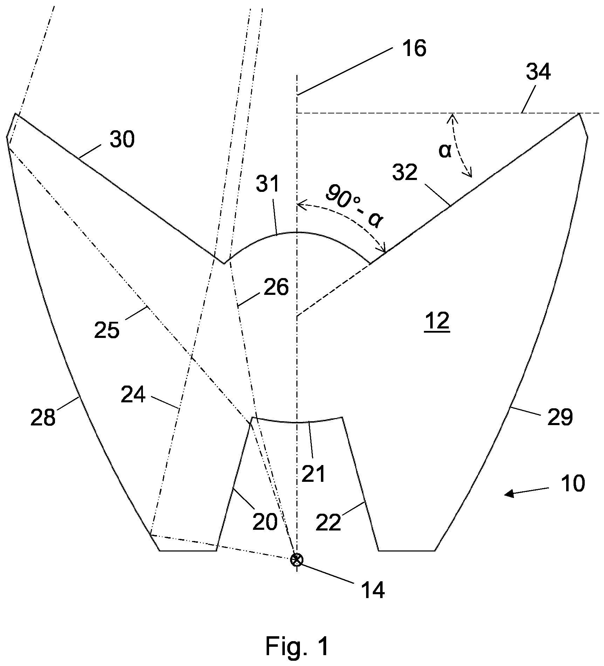

Eine erste Ausführungsform der erfindungsgemäßen Beleuchtungseinrichtung 10 ist im Querschnitt quer zu seiner Längsrichtung in Figur 1 gezeigt. Die Beleuchtungseinrichtung 10 umfasst ein Linsenelement 12 und eine entlang der Längsrichtung auf einer Seite des Linsenelements 12 angeordnete Lichtquelle 14. Entlang der Längsrichtung weist das Linsenelement 12 auf zumindest einem Abschnitt und vorzugsweise über seine gesamte optisch aktive Länge gleichbleibend das gezeigte Querschnittsprofil auf. Das Linsenelement 12 ist spiegelsymmetrisch zu einer sich entlang der Längsrichtung erstreckenden Zentrumsebene 16.

Das Linsenelement 12 weist einen transparenten Linsenkörper mit drei der Lichtquelle 14 zugewandten Einkoppelflächen 20, 21, 22 auf, durch die das von der Lichtquelle14 emittierte Licht in den Linsenkörper eintritt. Exemplarisch sind drei Lichtstrahlen 24, 25, 26 dargestellt, die links der Zentrumsebene 16 in drei unterschiedlichen Richtungen verlaufen. Die peripheren Lichtstrahlen, repräsentiert durch die Lichtstrahlen 24, 25 treten durch die äußere Einkoppelfläche 20 und die zentralen Lichtstrahlen, repräsentiert durch den Lichtstrahl 26, durch die mittlere Einkoppelfläche 21 in den Linsenkörper ein. Die mittlere Einkoppelfläche 21 weist eine konvex gekrümmte Oberfläche auf.

Der Linsenkörper ist ferner durch zwei Reflexionsflächen 28, 29 umfänglich begrenzt, an denen zumindest ein Teil des eingekoppelten Lichts innerhalb des Linsenkörpers totalreflektiert wird. Konkret sind dies die peripheren Lichtstrahlen, die durch die äußeren Einkoppelflächen 20, 22 in den Linsenkörper eintreten.

Das Linsenelement 12 weist schließlich noch drei Auskoppelflächen 30, 31, 32 auf, durch die das eingekoppelte Licht aus dem Linsenkörper austritt. Die mittlere Auskoppelfläche 31 weist eine konvex gekrümmte Oberfläche auf, durch die überwiegend innerhalb des Linsenkörpers nicht reflektierte zentrale Lichtstrahlen aus dem Linsenkörper austreten. Die konvexen Krümmungen der mittleren Einkoppelfläche 20 und der mittleren Auskoppelfläche 31 sind, abhängig von dem Brechungsindex des Linsenmaterials, so aufeinander abgestimmt und dimensioniert, dass die Brennweite für die zentralen, innerhalb des Linsenkörpers nicht reflektierten Lichtstrahlen dieselbe ist wie für die (überwiegend) innerhalb des Linsenkörpers reflektierten peripheren Lichtstrahlen.

Die äußeren Auskoppelflächen 30, 32 sind symmetrisch beidseits der Zentrumsebene angeordnet und jeweils zur Zentrumsebene hin geneigt. Zwischen den Auskoppelflächen 30, 32 und der Zentrumsebene 16 außerhalb der Linsenelements ist jeweils ein spitzer Winkel (90° - $\alpha$) eingeschlossen, wobei $\alpha$ der Neigungswinkel zwischen der jeweiligen Auskoppelfläche und einer Hilfsebene 34 parallel zur Längsrichtung und senkrecht zur Zentrumsebene 16 ist. In der Hilfsebene liegt auch die auskoppelseitigen Endfläche des Linsenelements, welche in obigem Sinne die Basis für die Bestimmung der Brennweite bildet. Durch die äußeren Auskoppelflächen 30, 32 treten (überwiegend) innerhalb des Linsenkörpers reflektierte, periphere Lichtstrahlen aus dem Linsenkörper aus. Aufgrund der zur Zentrumsebene 16 spiegelsymmetrischen Anordnung der beiden nach innen geneigten, äußeren Auskoppelfläche 30, 31 weist das Linsenelement unterhalb der Hilfsebene einen Hohlraum und damit gegenüber einem Linsenelement mit einer flachen, in der Hilfsebene liegenden Auskoppelfläche ein geringeres Volumen auf. Jedoch hat eine zu steile Neigung den Nachteil, dass das Linsenelement nicht mehr tolerable Fresnelverluste erzeugt. Ferner ist steigt auch die Bauhöhe des Linsenelement in Richtung der Zentrumsebene, was ebenfalls nicht erwünscht sein kann.

Wie man erkennt, sind das Linsenelement 12 mit seinen Einkoppelflächen 20, 21, 22, Reflexionsflächen 28, 29 und Auskoppelflächen 30, 31, 32 und die Lichtquelle 14 so angeordnet, dass das durch die Auskoppelflächen aus dem Linsenkörper austretende Licht konvergiert.

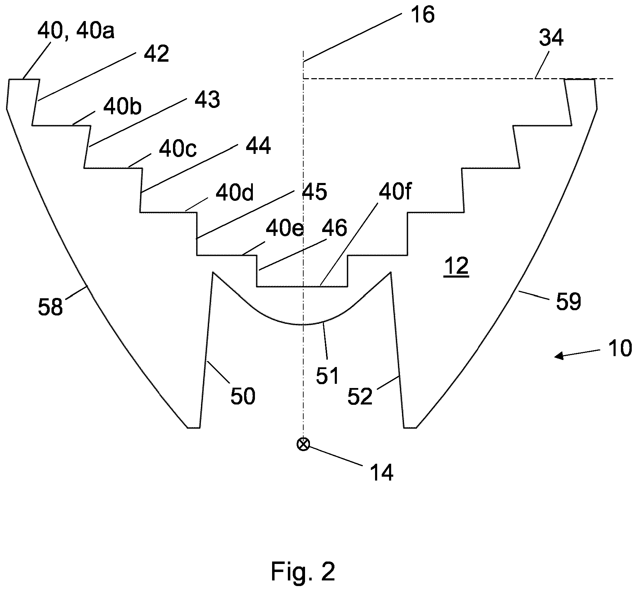

Eine zweite Ausführungsform der erfindungsgemäßen Beleuchtungseinrichtung 10 ist im Querschnitt quer zu seiner Längsrichtung in Figur 2 dargestellt. Sie umfasst abermals ein Linsenelement 12 und eine entlang der Längsrichtung auf einer Seite des Linsenelements 12 angeordnete Lichtquelle 14. Entlang der Längsrichtung ist das Querschnittsprofile des Linsenelements 12 wiederum auf zumindest einem Abschnitt und vorzugsweise über seine gesamte optisch aktive Länge gleichbleibend. Und auch dieses Linsenelement 12 ist spiegelsymmetrisch zu einer sich entlang der Längsrichtung erstreckenden Zentrumsebene 16.

Im Unterschied zu dem Linsenelement 12 aus Figur 1 weist das Linsenelement gemäß Figur 2 nur eine einzige flache, Auskoppelfläche 40 auf, in welcher jeweils fünf Stufen symmetrisch beidseits der Zentrumsebene 16 ausgebildet sind. Die Stufen werden durch einen Versatz der Auskoppelfläche 40 im Wesentlichen in Richtung der optischen Zentrumsebene 16 gebildet. Durch jede Stufe ist die Auskoppelfläche 40 in zwei benachbarte, optisch funktionale Auskoppelteilflächen 40a, 40b, 40c, 40d, 40e, 40f geteilt, welche durch Versatzflächen 42, 43, 44, 45, 46 miteinander verbunden sind, welche Versatzflächen keine optische Funktion haben. Genauer liegen die Versatzflächen 42, 43, 44, 45, 46 in Ebenen, welche um nicht mehr als 10° gegenüber der Zentrumsebene 16 geneigt ist, wodurch es möglich ist, die Versatzflächen so zu neigen, dass nur ein möglichst geringer bis gar kein Anteil der Lichtstrahlen durch die Versatzflächen 42, 43, 44, 45, 46 aus dem Linsenlement austreten.

Einen weiteren Unterschied zu dem Linsenelement 12 aus Figur 1 stellt die deutlich stärkere konvexe Krümmung der mittleren Einkoppelfläche 51 dar, welche dem Umstand geschuldet ist, dass die Auskoppelfläche 40 einschließlich der Auskoppelteilfläche 40f parallel zur Hilfsebene 34 verläuft und deshalb weniger stark zur Brechung der zentralen Lichtstrahlen beiträgt.

Die übrigen geometrische Gestalt des Linsenelements gemäß Figur 2, wie beispielsweise die Bauhöhe, die Neigung der äußeren Einkoppelflächen 50, 52 und die Neigung und die Krümmung der Reflexionsflächen 58, 59, ist an den geänderten Strahlenverlauf innerhalb des Linsenkörpers so angepasst, dass das durch die Auskoppelfläche 40 aus dem Linsenkörper austretende Licht wiederum konvergiert.

Im Vergleich mit der Beleuchtungseinrichtung gemäß Figur 1 können durch die Stufen anstelle der geneigten Auskoppelflächen die Fresnelverluste verringert werden und auch die Bauhöhe des Linsenelement hat sich reduziert. Jedoch ist der Querschnitt an manchen Stellen stark geschwächt, was sich negativ auf die Produktionsqualität auswirkt. Lange Profile mit diesem Querschnitt lassen sich deshalb nicht sicher mit ausreichender Präzision herstellen.

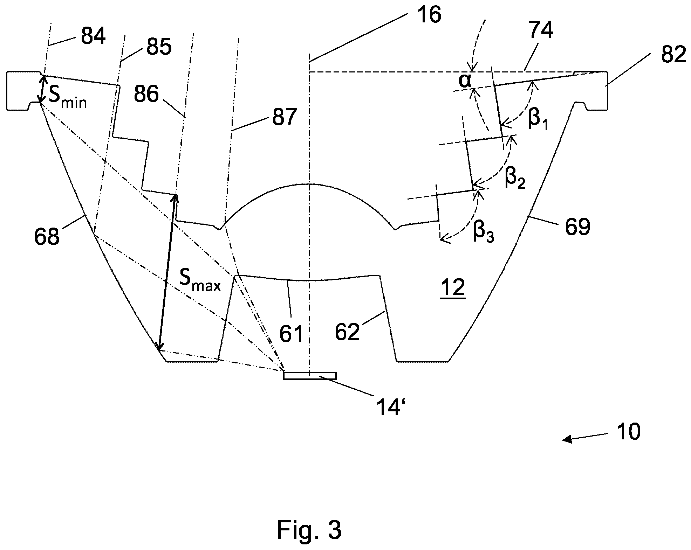

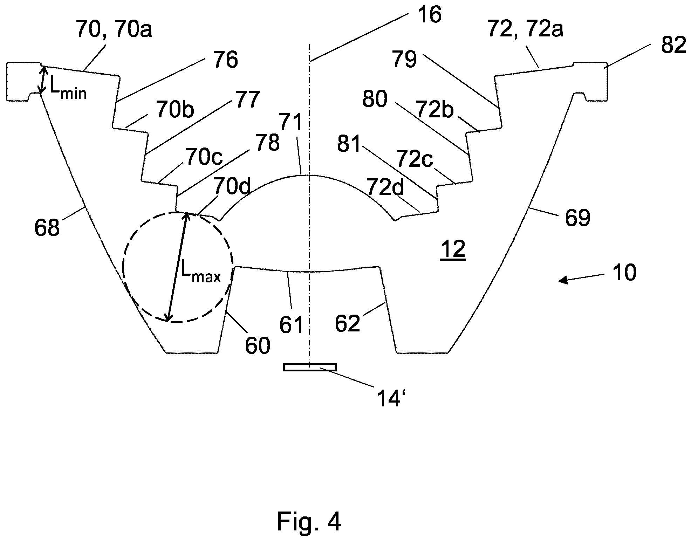

Die Figuren 3 und 4 zeigen dieselbe dritte Ausgestaltung der erfindungsgemäßen Beleuchtungseinrichtung. Das Linsenelement 12 gemäß den Figuren 3 und 4 ist eine Kombination aus den Linsenelementen gemäß den Figuren 1 und 2. Wie das Linsenelement 12 gemäß Figur 1 weist es drei der Lichtquelle 14, zugewandten Einkoppelflächen 60, 61, 62 auf, von denen die mittlere Einkoppelfläche 61 eine konvex gekrümmte Oberfläche aufweist. Die Lichtquelle 14' ist in dieser Figur anders als zuvor als ausgedehnte Lichtquelle dargestellt.

Der Linsenkörper ist wie in beiden anderen Ausführungsformen durch zwei Reflexionsflächen 68, 69 umfänglich begrenzt, an denen zumindest ein Teil des eingekoppelten Lichts innerhalb des Linsenkörpers totalreflektiert wird. Auch hier sind dies die peripheren Lichtstrahlen, die durch die äußeren Einkoppelflächen 60, 62 in den Linsenkörper eintreten.

Das Linsenelement 12 weist schließlich wiederum drei Auskoppelflächen 70, 71, 72 auf. Die äußeren Auskoppelflächen 70, 72 sind wie im Fall des ersten Ausführungsbeispiels symmetrisch beidseits der Zentrumsebene angeordnet und jeweils zur Zentrumsebene hin geneigt, wobei der Neigungswinkel $\alpha$ zwischen den äußeren Auskoppelflächen 70, 72 und der Hilfsebene 74 verglichen mit dem des ersten Ausführungsbeispiels geringer ist, was diesem gegenüber die Fresnelverluste und zugleich die Bauhöhe verringert. Die mittlere Auskoppelfläche 71 weist ebenfalls wie im Fall des ersten Ausführungsbeispiels eine konvex gekrümmte Oberfläche auf, durch die überwiegend innerhalb des Linsenkörpers nicht reflektierte zentrale Lichtstrahlen aus dem Linsenkörper austreten. Die konvexen Krümmungen der mittleren Einkoppelfläche 61 und der mittleren Auskoppelfläche 71 sind, wie im Fall der Figur 1 abhängig von dem Brechungsindex des Linsenmaterials, so aufeinander abgestimmt und dimensioniert, dass die Brennweite für die zentralen, innerhalb des Linsenkörpers nicht reflektierten Lichtstrahlen dieselbe ist wie für die (überwiegend) innerhalb des Linsenkörpers reflektierten peripheren Lichtstrahlen.

Gleichzeitig sind äußeren Auskoppelflächen 70, 72 wie im zweiten Ausführungsbeispiel mit einer Mehrzahl von Stufen versehen. In diesem Fall sind jeweils drei Stufen symmetrisch beidseits der Zentrumsebene 16 angeordnet. Die Stufen werden durch einen Versatz der äußeren Auskoppelflächen 70,72 gebildet. Durch jede Stufe sind die Auskoppelflächen 70, 72 in jeweils zwei benachbarte, optisch funktionale Auskoppelteilflächen 70a, 70b, 70c, 70d bzw. 72a, 72b, 72c, 72d geteilt, welche parallel unter dem gleichen Neigungswinkel $\alpha$ zur Hilfsebene 74 oder auskoppelseitigen Endfläche verlaufen und welche durch die Versatzflächen 76, 77, 78 bzw. 79, 80, 81 miteinander verbunden sind, siehe Figur 4. Dort, wo sich die Ebenen der Auskoppelteilflächen und die Ebenen der Versatzflächen schneiden ist jeweils eine Kante ausgebildet.

Jeweils seitlich außerhalb der Reflexionsflächen 68, 69 und der äußeren Auskoppelflächen 70, 72 befindet sich einstückig angeformt ein Halterand 82 für die Montage des Linsenelement in einem nicht dargestellten Gehäuse der Beleuchtungseinrichtung.

In Figur 3 sind exemplarisch vier Lichtstrahlen 84, 85, 86, 87 dargestellt, die links der Zentrumsebene 16 in vier unterschiedlichen Richtungen verlaufen. Die peripheren Lichtstrahlen, repräsentiert durch die Lichtstrahlen 84, 85, 86, treten durch die äußere Einkoppelfläche 60 und die zentralen Lichtstrahlen, repräsentiert durch den Lichtstrahl 87, durch die mittlere Einkoppelfläche 61 in den Linsenkörper ein. Wie man beispielhaft anhand der Lichtstrahlen 85 und 86 erkennen kann, verlaufen die Versatzflächen 76, 77 und 78 parallel zur Strahlrichtung der jeweils entlang der entsprechenden Kante jener Stufe austretenden Lichtstrahlen. Die Versatzflächen haben demzufolge keine optische Funktion. Da die Lichtstrahlen konvergent verlaufen sind auch die Versatzflächen nicht parallel zueinander, sondern schließen von außen nach innen betrachtet zunehmende Zwischenwinkel $\beta_1$ bis $\beta_3$ zwischen den Auskoppelteilflächen und den jeweiligen Versatzflächen ein.

Das Ausführungsbeispiel der Beleuchtungseinrichtung gemäß den Figuren 3 und 4 vereint die Vorteile beider Ausführungsbeispiele gemäß den Figuren 1 und 2. Sowohl sind die Fresnelverluste aufgrund der Stufen und der weniger stark geneigten Auskoppelflächen verringert und gleichzeitig ist die Bauhöhe des Linsenelement reduziert. Gleichzeitig ist es durch die Kombination der Neigung der äußeren Auskoppelflächen in Kombination mit den Stufen gelungen ein Profil bereitzustellen, welches einen Querschnitt mit weniger Schwachstellen aufweist und deshalb die Herstellung von langen Profilen unter Einhaltung der für die optischen Abbildungseigenschaften erforderlichen Toleranzen ermöglicht.

Insbesondere sind, wie in Figur 3 anhand der Lichtstrahlen 84 und 86 illustriert, die Stufen so dimensioniert und angeordnet, dass eine maximale Strecke $S_{max}$, die der reflektierte Lichtstrahl 86 in dem Linsenkörper zwischen der Reflexionsfläche 68 und der Auskoppelteilfläche 70c zurücklegt, und ein minimale Strecke $S_{min}$, die der reflektierte Lichtstrahl 84 in dem Linsenkörper zwischen der 68 Reflexionsfläche und der Auskoppelteilfläche 70a zurücklegt, ein Verhältnis $S_{max}$ / $S_{min}$ von ca. 5,5 aufweisen.

Außerdem weist das Linsenvolumen, wie in Figur 4 zu erkennen ist, im Querschnitt eine maximale Erstreckung $L_{max}$ und eine minimale Erstreckung $L_{min}$ auf, wobei die maximale Erstreckung $L_{max}$ den maximalen Kreisdurchmesser bezeichnet, der vollständig innerhalb des Querschnitts Platz findet, und wobei die minimale Erstreckung $L_{min}$ der geringste lineare Abstand zwischen der oder zwischen einer Reflexionsfläche 68 und der Auskoppelteilfläche 70a ist, zwischen denen ein Verhältnis $L_{max}$ / $L_{min}$ von 3,7 eingehalten ist.

Durch diese Maßnahme ist sichergestellt, dass die Dicke des Profils in Richtung des Strahlenverlaufs innerhalb der Linse nicht mehr variiert, als es der optische Strahlengang innerhalb der Linsenelements erfordert, was eine ausreichend gleichmäßige Abkühlung des Profils nach der Formgebung sicherstellt und die Herstellung von langen Profilen unter Einhaltung der für die optischen Abbildungseigenschaften erforderlichen Toleranzen ermöglicht.

Schließlich weist das Querschnittsprofil dieses Ausführungsbeispiels bei Abmessungen von 60 mm Breite und 30 mm Höhe eine Querschnittsfläche von 710 mm$^2$ und eine Umfangslänge vom 215mm auf, wodurch das Verhältnis aus Querschnittsfläche zu Umfangslänge mit 3,3 mm beträgt.

Jedes dieser drei Merkmale und insbesondere alle drei Merkmale in Kombination stellen sicher, dass das Profil nach der Formgebung gleichmäßig Abkühlt und sich deshalb in Längen von 6 m unter Einhaltung der für die optischen Abbildungseigenschaften erforderlichen Toleranzen herstellen lässt.

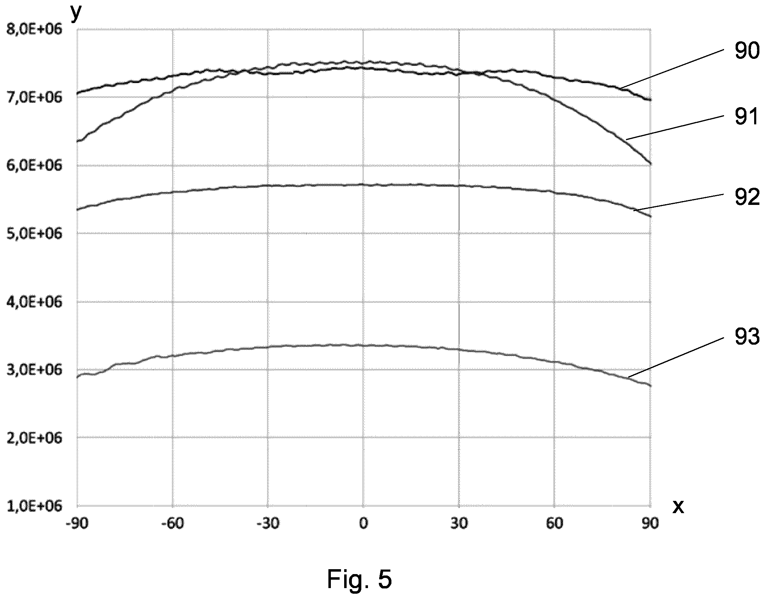

In Figur 5 ist ein Diagramm gezeigt, dass entlang der Zentrumsebene die Beleuchtungsstärke unter Verwendung einer erfindungsgemäßen Beleuchtungseinrichtung mit TIR-Linse gemäß den Figuren 3 und 4 im Vergleich zu der Beleuchtungsstärke unter Verwendung einer Beleuchtungseinrichtung mit Zylinderlinse jeweils in zwei unterschiedlichen Arbeitsabständen wiedergibt. Die Beleuchtungseinrichtungen hatten jeweils eine Länge von 300 mm. Auf der horizontalen x-Achse ist in Längsrichtung der Abstand vom Zentrum der Beleuchtungseinrichtung nach beiden Seiten in mm aufgetragen. Auf der y-Achse ist die Beleuchtungsstärke auf der Oberfläche des beleuchteten Gegenstands in lx aufgetragen.

Die Kurve 90 repräsentiert die Beleuchtungsstärke der erfindungsgemäßen Beleuchtungseinrichtung entlang der Zentrumsebene auf der Oberfläche eines Gegenstands im Abstand von 50 mm. Die Kurve 91 repräsentiert die Beleuchtungsstärke der erfindungsgemäßen Beleuchtungseinrichtung entlang der Zentrumsebene auf der Oberfläche eines Gegenstands im Abstand von 150 mm. Die Kurve 92 repräsentiert die Beleuchtungsstärke der Beleuchtungseinrichtung mit Zylinderlinse entlang der Zentrumsebene auf der Oberfläche eines Gegenstands im Abstand von 50 mm. Die Kurve 93 repräsentiert die Beleuchtungsstärke der Beleuchtungseinrichtung mit Zylinderlinse entlang der Zentrumsebene auf der Oberfläche eines Gegenstands im Abstand von 150 mm.

Mit der erfindungsgemäßen Beleuchtungseinrichtung mit TIR-Linsenelement lässt sich dem Diagramm zufolge eine deutlich höhere absolute Beleuchtungsstärke als mit den Zylinderlinsen erreichen. Für den Arbeitsabstand von 150 mm ist diese bei Verwendung des TIR-Linsenelements um über 120% höher und für den Arbeitsabstand von 50 mm immerhin noch um knapp 30% höher als bei dem Zylinderlinsenelement. Für die erfindungsgemäßen Beleuchtungseinrichtung mit TIR-Linsenelement spricht damit einhergehend eine deutlich geringere Abhängigkeit der Beleuchtungsstärke von dem Arbeitsabstand. Die Variation der Beleuchtungsstärke beträgt in dem gesamten Arbeitsabstandsbereich von 50 mm bis 150 mm weniger als 25%.

Da die Beleuchtungseinrichtungen sich in Längsrichtung jeweils nur 60mm über die dargestellten Diagramme hinaus erstrecken, erkennt man unabhängig von der jeweiligen Beleuchtungseinrichtung und dem jeweiligen Arbeitsabstand zu Rändern hin einen leichten Abfall der Intensitäten bei geringem Arbeitsabstand und einen ausgeprägten Abfall der Intensitäten bei großem Arbeitsabstand. Dieser Effekt tritt grundsätzlich nur an dem Rändern auf und ist in der Praxis vernachlässigbar, weil die eingesetzten Beleuchtungseinrichtungen Abmessungen von mehreren Metern in Längsrichtung haben.

### Bezugszeichenliste

| | |
|---|---|
| 10 | Beleuchtungseinrichtung |
| 12 | Linsenelement |
| 14, 14' | Lichtquelle |
| 16 | Zentrumsebene |
| 20 | äußere Einkoppelfläche |
| 21 | mittlere Einkoppelfläche |
| 22 | äußere Einkoppelfläche |
| 24 | Lichtstrahl |
| 25 | Lichtstrahl |
| 26 | Lichtstrahl |
| 28 | Reflexionsflächen |
| 29 | Reflexionsflächen |
| 30 | äußere Auskoppelfläche |
| 31 | mittlere Auskoppelfläche |
| 32 | äußere Auskoppelfläche |
| 34 | Hilfsebene |
| 40 | Auskoppelfläche |
| 40a | Auskoppelteilfläche |
| 40b | Auskoppelteilfläche |
| 40c | Auskoppelteilfläche |
| 40d | Auskoppelteilfläche |
| 40e | Auskoppelteilfläche |
| 40f | Auskoppelteilfläche |
| 42 | Versatzfläche |
| 43 | Versatzfläche |
| 44 | Versatzfläche |
| 45 | Versatzfläche |
| 46 | Versatzfläche |
| 50 | äußere Einkoppelfläche |
| 51 | mittlere Einkoppelfläche |
| 52 | äußere Einkoppelfläche |
| 54 | Lichtstrahl |
| 55 | Lichtstrahl |
| 56 | Lichtstrahl |
| 58 | Reflexionsflächen |
| 59 | Reflexionsflächen |
| 60 | äußere Einkoppelfläche |
| 61 | mittlere Einkoppelfläche |
| 62 | äußere Einkoppelfläche |
| 68 | Reflexionsflächen |
| 69 | Reflexionsflächen |
| 70 | äußere Auskoppelfläche |
| 70a | äußere Auskoppelteilfläche |
| 70b | äußere Auskoppelteilfläche |
| 70c | äußere Auskoppelteilfläche |
| 70d | äußere Auskoppelteilfläche |
| 71 | mittlere Auskoppelfläche |
| 72 | äußere Auskoppelfläche |
| 72a | äußere Auskoppelteilfläche |
| 72b | äußere Auskoppelteilfläche |
| 72c | äußere Auskoppelteilfläche |
| 72d | äußere Auskoppelteilfläche |
| 74 | Hilfsebene |
| 76 | Versatzfläche |
| 77 | Versatzfläche |
| 78 | Versatzfläche |
| 79 | Versatzfläche |
| 80 | Versatzfläche |
| 81 | Versatzfläche |
| 82 | Halterand |
| 84 | Lichtstrahl |
| 85 | Lichtstrahl |
| 86 | Lichtstrahl |
| 87 | Lichtstrahl |
| 90 | Helligkeitsverlauf eines erfindungsgemäßen Linsenelements |
| 91 | Helligkeitsverlauf eines erfindungsgemäßen Linsenelements |
| 92 | Helligkeitsverlauf eines Zylinderlinsenelements |
| 93 | Helligkeitsverlauf eines Zylinderlinsenelements |
| α | Neigungswinkel der äußeren Auskoppelflächen |

### Patentansprüche

1. Beleuchtungseinrichtung (10) zum Erzeugen einer Linienbeleuchtung entlang einer Längsrichtung

mit einem Linsenelement (12), welches entlang der Längsrichtung eine optische Zentrumsebene (16) definiert und welches entlang der Längsrichtung auf zumindest einem Abschnitt ein gleichbleibendes Querschnittsprofil aufweist, mit einer oder mehreren entlang der Längsrichtung auf einer Seite des Linsenelements (12) angeordneten Lichtquellen (14, 14'), wobei das Linsenelement (12) einen transparenten Linsenkörper mit einer oder mehreren der oder den Lichtquellen zugewandten Einkoppelflächen (20, 21, 22, 50, 51, 52, 60, 61, 62), durch die das von der oder den Lichtquellen (14, 14') emittierte Licht in den Linsenkörper eintritt, mit einer oder mehreren Reflexionsflächen (28, 29, 58, 59, 68, 69), an denen zumindest ein Teil des eingekoppelten Lichts innerhalb des Linsenkörpers totalreflektiert wird und mit einer oder mehrerer Auskoppelflächen (30, 31, 32, 40, 70, 71, 72), durch die das eingekoppelte Licht aus dem Linsenkörper austritt, aufweist und wobei das Linsenelement (12) und die Lichtquelle oder die Lichtquellen (14, 14') so angeordnet sind, dass das durch die Auskoppelflächen (30, 31, 32, 40, 70, 71, 72) aus dem Linsenkörper austretende Licht konvergiert.

2. Beleuchtungseinrichtung (10) nach Anspruch 1, **dadurch gekennzeichnet, dass** zumindest eine Auskoppelfläche (40, 70, 72) wenigstens eine Stufe aufweist, wobei die Stufe durch einen Versatz der zumindest einen Auskoppelfläche (40, 70, 72) im Wesentlichen in Richtung der optischen Zentrumsebene (16) gebildet wird.

3. Beleuchtungseinrichtung (10) nach Anspruch 2, **dadurch gekennzeichnet, dass** die wenigstens eine Stufe durch einen Versatz der zumindest einen Auskoppelfläche (40, 70, 72) parallel zur Strahlrichtung der entlang der Kante der Stufe austretenden Lichtstrahlen gebildet wird.

4. Beleuchtungseinrichtung (10) nach Anspruch 2 oder 3, **dadurch gekennzeichnet, dass** die wenigstens eine Stufe so dimensioniert und angeordnet ist, dass für die maximale Strecke $S_{max}$, die ein reflektierter Lichtstrahl zwischen einer Reflexionsfläche (58, 59, 68, 69) und einer Auskoppelfläche (40, 70, 72) in dem Linsenkörper zurücklegt, und für die minimale Strecke $S_{min}$, die ein reflektierter Lichtstrahl zwischen einer Reflexionsfläche (58, 59, 68, 69) und einer Auskoppelfläche (40, 70, 72) in dem Linsenkörper zurücklegt oder die ein direkter Lichtstrahl zwischen einer Einkoppelfläche (21, 51, 61) und einer Auskoppelfläche (31, 40, 71) in dem Linsenkörper zurücklegt, gilt:

$$1 < S_{max} / S_{min} < 6.$$

5. Beleuchtungseinrichtung (10) nach einem der vorstehenden Ansprüche, **dadurch gekennzeichnet, dass** zumindest eine Auskoppelfläche (31, 71) eine konvex gekrümmte Oberfläche aufweist, durch die innerhalb des Linsenkörpers nicht reflektierte Lichtstrahlen aus dem Linsenkörper austreten.

6. Beleuchtungseinrichtung (10) nach einem der vorstehenden Ansprüche, **dadurch gekennzeichnet, dass** zumindest eine Auskoppelfläche (30, 32, 70, 72) zur Zentrumsebene (16) hin geneigt ist, durch die innerhalb des Linsenkörpers reflektierte Lichtstrahlen aus dem Linsenkörper austreten.

7. Beleuchtungseinrichtung (10) nach Anspruch 6 in Kombination mit einem der Ansprüche 2 bis 4, **dadurch gekennzeichnet, dass** die wenigstens eine Stufe in der zumindest einen zur Zentrumsebene (16) hin geneigten Auskoppelfläche (30, 32, 70, 72) ausgebildet ist.

8. Beleuchtungseinrichtung nach einem der vorstehenden Ansprüche, **dadurch gekennzeichnet, dass** das Linsenvolumen im Querschnitt eine maximale Erstreckung $L_{max}$ und eine minimale Erstreckung $L_{min}$ aufweist, wobei die maximale Erstreckung $L_{max}$ den maximalen Kreisdurchmesser bezeichnet, der vollständig innerhalb des Querschnitts Platz findet, und wobei die minimale Erstreckung $L_{min}$ der geringste lineare Abstand zwischen einer Einkoppelfläche (20, 21, 22, 50, 51, 52, 60, 61, 62) und einer Auskoppelfläche (30, 31, 32, 40, 70, 71, 72) oder zwischen einer Reflexionsfläche (28, 29, 58, 59, 68, 69) und einer Auskoppelfläche (30, 31, 32, 40, 70, 71, 72) ist, und wobei gilt

$$1 < L_{max} / L_{min} < 5.$$

9. Beleuchtungseinrichtung (10) nach einem der vorstehenden Ansprüche, **dadurch gekennzeichnet, dass** das Querschnittsprofil eine Querschnittsfläche und eine Umfangslänge aufweist, wobei das Verhältnis aus Querschnittsfläche zu Umfangslänge zwischen 2,0 mm und 4,5 mm, bevorzugt zwischen 2,5 mm und 4,0 mm beträgt.

10. Beleuchtungseinrichtung (10) nach einem der vorstehenden Ansprüche, **dadurch gekennzeichnet, dass** das Linsenelement ein Aspektverhältnis zwischen Länge und maximaler Breite von mindestens 10:1, vorzugsweise 20:1, besonders bevorzugt von 50:1 aufweist.

11. Beleuchtungseinrichtung (10) nach einem der vorstehenden Ansprüche, **dadurch gekennzeichnet,**

**dass** das Linsenelement ein strangpressfähiges Profil aufweist.

12. Beleuchtungseinrichtung (10) nach einem der vorstehenden Ansprüche, **dadurch gekennzeichnet, dass** das Linsenelement aus PMMA gefertigt ist.

13. Beleuchtungseinrichtung (10) nach einem der vorstehenden Ansprüche, **dadurch gekennzeichnet, dass** die Lichtquelle (14, 14') aus einer oder mehreren LEDs gebildet ist.

14. Beleuchtungseinrichtung (10) nach einem der Ansprüche 2 bis 13, **dadurch gekennzeichnet, dass** die zumindest eine Auskoppelfläche (30, 32,70, 72) drei Stufen aufweist.

15. Einrichtung zur optischen Inspektion eines Gegenstands mit einer Beleuchtungseinrichtung (10) nach einem vorstehenden Ansprüche, wobei der Gegenstand und die Beleuchtungseinrichtung (10) in einer Bewegungsrichtung relativ zueinander bewegbar sind, wobei die Längsrichtung quer zur Bewegungsrichtung angeordnet ist und wobei die Beleuchtungseinrichtung so auf den Gegenstand ausrichtbar ist, dass das durch die Auskoppelflächen (30, 31, 32, 40, 70, 71, 72) aus dem Linsenkörper austretende Licht auf eine Oberfläche des Gegenstands fällt,

mit einer Aufnahmeeinrichtung zur Aufnahme von Bildern von dem beleuchteten Gegenstand und mit einer Recheneinheit zur Auswertung der aufgenommenen Bilder.

Fig. 1

Fig. 2

Fig. 3

EP 4 722 698 A1

13

Fig. 4

EP 4 722 698 A1

Fig. 5

**EUROPÄISCHER RECHERCHENBERICHT**

Europäisches Patentamt
European Patent Office
Office européen des brevets

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/089052 A1 (KATZIR YIGAL [IL] ET AL) 17. April 2008 (2008-04-17) | 1,5,6, 9-11,13, 15 | INV. G01N21/88 G01N21/89 |
| Y | * Absätze [0030] - [0035]; Anspruch 1; Abbildungen 1, 3, 4, 14 * ----- | 2-4,7,8, 12,14,15 | G01N21/896 G01N21/958 G02B27/09 |
| X | US 2021/360140 A1 (KATZIR YIGAL [IL] ET AL) 18. November 2021 (2021-11-18) | 1,5,6, 9-11,13, 15 | |
| Y | * Zusammenfassung; Anspruch 1; Abbildungen 81A, 2A, 2B, 8A * ----- | 2-4,7,8, 12,14,15 | |
| X | US 5 526 190 A (HUBBLE III FRED F [US] ET AL) 11. Juni 1996 (1996-06-11) | 1-5,8, 11-13 | |
| Y | * Zusammenfassung; Anspruch 1; Abbildungen 1-3 * ----- | 15 | |
| Y | WO 2024/034459 A1 (KOITO MFG CO LTD [JP]) 15. Februar 2024 (2024-02-15) * Zusammenfassung; Anspruch 1; Abbildungen 4a-4c * ----- | 2-4,7,8, 12,14 | |
| X,P | EP 4 509 755 A1 (BARTENBACH HOLDING GMBH [AT]) 19. Februar 2025 (2025-02-19) * Absatz [0063]; Ansprüche 1, 6; Abbildungen 1-4 * ----- | 1,5,6, 11,13 | **RECHERCHIERTE SACHGEBIETE (IPC)** G01N |

Der vorliegende Recherchenbericht wurde für alle Patentansprüche erstellt

| Recherchenort | Abschlußdatum der Recherche | Prüfer |
|---|---|---|
| Berlin | 11. Februar 2026 | Koll, Hermann |

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 25 20 1376

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2026

| Im Recherchenbericht angeführtes Patentdokument | Datum der Veröffentlichung | Mitglied(er) der Patentfamilie | Datum der Veröffentlichung |
|---|---|---|---|
| US 2008089052 A1 | 17-04-2008 | CN 101162291 A | 16-04-2008 |
| | | IL 186031 A | 31-03-2011 |
| | | JP 5339707 B2 | 13-11-2013 |
| | | JP 2008116930 A | 22-05-2008 |
| | | KR 20080033847 A | 17-04-2008 |
| | | TW 200817722 A | 16-04-2008 |
| | | US 2008089052 A1 | 17-04-2008 |
| US 2021360140 A1 | 18-11-2021 | CN 112888936 A | 01-06-2021 |
| | | EP 3847446 A1 | 14-07-2021 |
| | | JP 7500545 B2 | 17-06-2024 |
| | | JP 2022501580 A | 06-01-2022 |
| | | KR 20210050565 A | 07-05-2021 |
| | | US 2021360140 A1 | 18-11-2021 |
| | | WO 2020049551 A1 | 12-03-2020 |
| US 5526190 A | 11-06-1996 | KEINE | |
| WO 2024034459 A1 | 15-02-2024 | JP 2024025241 A | 26-02-2024 |
| | | WO 2024034459 A1 | 15-02-2024 |
| EP 4509755 A1 | 19-02-2025 | DE 102023121516 A1 | 13-02-2025 |
| | | EP 4509755 A1 | 19-02-2025 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1742041 A1
- EP 1030173 A1
- DE 19813073 A1
- EP 3236198 A1